# EUROPÄISCHE PATENTSCHRIFT

(11) **EP 4 309 261 B1**
(45) Veröffentlichungstag und Bekanntmachung des Hinweises auf die Patenterteilung: **17.07.2024**
(21) Anmeldenummer: 22726037.9
(22) Anmeldetag: 27.04.2022
(51) Int. Cl.: H02J 9/00

(54) **ENERGIEVERSORGUNGSEINHEIT, ENERGIEVERSORGUNGSSYSTEM MIT EINER ENERGIEVERSORGUNGSEINHEIT SOWIE VERFAHREN ZUM BETRIEB EINER ENERGIEVERSORGUNGSEINHEIT**
ENERGY SUPPLY UNIT, ENERGY SUPPLY SYSTEM HAVING AN ENERGY SUPPLY UNIT, AND METHOD FOR OPERATING AN ENERGY SUPPLY UNIT
UNITÉ D'ALIMENTATION EN ÉNERGIE, SYSTÈME D'ALIMENTATION EN ÉNERGIE DOTÉ D'UNE UNITÉ D'ALIMENTATION EN ÉNERGIE ET PROCÉDÉ POUR FAIRE FONCTIONNER UNE UNITÉ D'ALIMENTATION EN ÉNERGIE

(30) Priorität: 10.05.2021 DE 102021112189
(43) Veröffentlichungstag der Anmeldung: 24.01.2024
(73) Patentinhaber: Instagrid GmbH, 71636 Ludwigsburg (DE)
(72) Erfinder: GUTKNECHT, Philipp, 71297 Mönsheim (DE); ZÜRNER, Raphael, 71636 Ludwigsburg (DE)
(74) Vertreter: Patentanwälte Bauer Vorberg Kayser
(86) Internationale Anmeldenummer: PCT/EP2022/061199
(87) Internationale Veröffentlichungsnummer: WO 2022/238122

(56) Entgegenhaltungen:
- DE-A1- 4 117 617
- US-A1- 2012 163 054

## Beschreibung

Die Erfindung betrifft eine Energieversorgungseinheit zur Versorgung eines Verbrauchers mit elektrischer Energie aus einer Energiequelle, ein Energieversorgungssystem mit einem wiederaufladbaren Energiespeicher sowie ein Verfahren zum Betrieb einer Energieversorgungseinheit zur Versorgung eines Verbrauchers mit elektrischer Energie aus einer Energiequelle.

Es gibt gesetzliche Regelungen, welche die zulässige Energieaufnahme eines netzbetriebenen, z. B. an einem Haushaltsstromnetz angeschlossenen Elektrogeräts im Stand-by-Betrieb begrenzen. Ein solcher Grenzwert kann z. B. 500 mW (und weniger) betragen.

Die US 2012/0163054 A1 offenbart eine Energieversorgungseinheit mit einem Spannungswandler und einer niedrigen Stand-by-Energieaufnahme. Eine Energieverwaltungseinheit ist auf einer Primärseite der Energieversorgungseinheit angeordnet. Die Energieverwaltungseinheit kann ein Steuersignal an eine Steuereinheit ausgeben, die den elektrischen Energiefluss in einem primären Leistungspfad abschalten kann. Auf diese Weise kann ein deutlich reduzierter Energieverbrauch erreicht werden. Ein Aufwecksignal kann die Energieverwaltungseinheit wieder aufwecken, sodass die Energieverwaltungseinheit mittels eines Steuersignals an die Steuereinheit den Spannungswandler wieder aktivieren kann.

Zum weiteren Stand der Technik sei auf die DE 41 17 617 A1 verwiesen, die eine Überstromdetektorschaltung mit einem Widerstand zum Erfassen eines Überstroms und eine Vorspannungschaltung zum Erzeugen einer im Wesentlichen konstanten Gleichspannung offenbart.

Allgemein sind Energieversorgungseinheiten gut bekannt, die einen elektrischen Verbraucher mit elektrischer Energie aus einer Energiequelle, insbesondere einem Stromnetz (hierin auch kurz als "Netz" bezeichnet), versorgen, wobei die vom Netz bereitgestellte elektrische Energie gewöhnlich in Form einer Wechselspannung zur Verfügung steht und von der Energieversorgungseinheit häufig mittels eines Leistungswandlers bzw. Konverters umgewandelt, insbesondere an die elektrischen Anforderungen des Verbraucher angepasst, und anschließend an den Verbraucher übertragen wird. Die vom Konverter umgewandelte, ausgangsseitige elektrische Ausgangsgröße kann gegenüber der netzseitigen Eingangsgröße beispielsweise eine höhere oder niedrigere Spannung und/oder Strom und/oder Frequenz aufweisen. Eingangs- und Ausgangsgrößen können beide entweder Wechselspannungen oder Gleichspannungen sein oder eine der beiden Größen kann eine Wechselspannung und die andere eine Gleichspannung sein.

Zur elektrischen Versorgung von Verbrauchern, die eine hohe Leistung aufnehmen, z. B. 100 W und mehr, kann der Leistungswandler entsprechend ausgelegt werden. Es gestaltet sich jedoch allgemein als schwierig bzw. kostspielig, den Leistungswandler gleichzeitig auch so zu dimensionieren, dass seine Leistungsaufnahme im Leerlauf eine gewisse Grenze, z. B. 10 W, unterschreitet.

Vor diesem Hintergrund liegt der Erfindung die Aufgabe zugrunde, eine Energieversorgungseinheit zur Versorgung eines Verbrauchers mit elektrischer Energie aus einer Energiequelle, ein Energieversorgungssystem mit einem wiederaufladbaren Energiespeicher und ein Verfahren zum Betrieb einer Energieversorgungseinheit bereitzustellen, die sich u. a. durch einen hohen Wirkungsgrad bei der Energieversorgung sowie durch eine geringe Stand-by-Energieaufnahme auszeichnen. Darüber hinaus sollen sie eine hohe elektrische Sicherheit mit geringen Herstellungskosten gewährleisten können.

Diese Aufgabe wird durch eine Energieversorgungseinheit mit den Merkmalen des Anspruchs 1, durch ein Energieversorgungssystem mit den Merkmalen des Anspruchs 14 sowie durch ein Verfahren zum Betrieb einer Energieversorgungseinheit mit den Merkmalen des Anspruchs 15 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Ein hierin verwendeter Begriff "etwa" gibt einen Toleranzbereich an, den der auf dem vorliegenden Gebiet tätige Fachmann als üblich ansieht. Insbesondere ist unter dem Begriff "etwa" ein Toleranzbereich der bezogenen Größe von bis maximal +/-20 %, bevorzugt bis maximal +/-10 % anzusehen.

Des Weiteren sind im Sinne der Erfindung hierin verwendete relative Begriffe bezüglich eines Merkmals, zum Beispiel "größer, "kleiner", "höher", "niedriger", "schwerer", "leichter" und dergleichen, stets so auszulegen, dass herstellungs- und/oder durchführungsbedingte Größenabweichungen des betreffenden Merkmals, die innerhalb der für die Fertigung bzw. Durchführung des jeweiligen Merkmals definierten Fertigungs-/Durchführungstoleranzen liegen, nicht von dem jeweiligen relativen Begriff erfasst sind. Mit anderen Worten ist eine Größe eines Merkmals erst dann als im Sinne der Erfindung "größer", "kleiner", "höher", "niedriger", "schwerer", "leichter" und dergleichen anzusehen als eine Größe eines Vergleichsmerkmals, wenn sich die beiden Vergleichsgrößen in ihrem Wert so deutlich voneinander unterscheiden, dass dieser Größenunterschied sicher nicht in den fertigungs-/durchführungsbedingten Toleranzbereich des betreffenden Merkmals fällt, sondern das Ergebnis zielgerichteten Handelns ist.

Erfindungsgemäß weist eine Energieversorgungseinheit zur Versorgung eines Verbrauchers mit elektrischer Energie aus einer Energiequelle, beispielsweise ein Stromnetz wie beispielsweise, jedoch ohne zwingende Beschränkung hierauf, ein Niederspannungsnetz (z. B. 230 VAC), einen Stromversorgungsanschluss, einen Verbraucheranschluss, einen Primärleistungswandler, der einen Konverter und einen Hilfsschaltungsteil aufweist, wenigstens einen Sekundärleistungswandler sowie eine Steuereinheit auf.

Der Stromversorgungsanschluss dient dazu, die Energiequelle elektrisch primärseitig an die Energieversorgungseinheit anzuschließen. Hierzu kann er beispielsweise als Steckvorrichtung ausgeführt sein, mit welchem die Energieversorgungseinheit bedarfsweise an das Stromnetz angeschlossen werden kann.

Der Verbraucheranschluss ermöglicht es, den Verbraucher verbraucherseitig elektrisch mit der Energieversorgungseinheit zu verbinden. Es ist hierbei zu verstehen, dass der Verbraucheranschluss nicht zwingend durch eine lösbare Verbindung verwirklicht sein muss, sondern ebenso als eine zwischen dem Verbraucher und der Energieversorgungseinheit betriebsmäßig unlösbare, permanente (z. B. gelötete) elektrische Verbindung ausgeführt sein kann. Dies kann beispielsweise dann besonders vorteilhaft sein, wenn die Energieversorgungseinheit und der Verbraucher Komponenten, insbesondere fest verbaute Komponenten, eines übergeordneten Systems, zum Beispiel ein Energieversorgungssystem, sind.

In diesem Sinne ist es ebenfalls nicht zwingend erforderlich, den Verbraucheranschluss überhaupt aus der Energieversorgungseinheit nach außen herauszuführen. Zum Beispiel kann ein Verbraucher, z. B. ein Energiespeicher wie eine Batteriezelle, in der Energieversorgungseinheit, z. B. sogar im Konverter selbst, integriert verbaut sein. In diesem Fall kann der Verbraucheranschluss auch ein interner Anschluss innerhalb der Energieversorgungseinheit sein.

Der Konverter (auch als Wandler bezeichnet) des Primärleistungswandlers dient der Wandlung und Übertragung der Energie vom Stromversorgungsanschluss zum Verbraucheranschluss. Allgemein ist hierunter eine Vorrichtung zu verstehen, die eine Anpassung oder Umsetzung der primärseitig zugeführten Konverterspannung in eine verbraucherseitige Verbraucherspannung vornimmt, um u. a. die primärseitige Konverterspannung an die elektrischen Anforderungen des Verbrauchers anzupassen. Dementsprechend kann die verbraucherseitige Ausgangsspannung des Konverters gegenüber der netzseitigen Eingangsspannung bzw. primärseitigen Konverterspannung insbesondere eine höhere oder niedrigere Spannung und/oder Frequenz aufweisen. Eingangs- und Ausgangsgrößen können beide Wechselspannungen oder beide Gleichspannungen sein oder eine der beiden Größen kann eine Wechselspannung und die andere eine Gleichspannung sein. Ebenso können Eingangs- und Ausgangsgrößen auf einen Strom anstelle einer Spannung bezogen sein.

Der Hilfsschaltungsteil des Primärleistungswandlers ist vorgesehen, wenigstens einen Betriebsparameter des Primärleistungswandlers zu erfassen und/oder den Konverter betriebsgemäß zu steuern. Betriebsparameter können beispielsweise eine Spannung, ein Strom, eine Temperatur und dergleichen sein, die von dem Hilfsschaltungsteil erfasst werden können, um einen augenblicklichen Betriebszustand des Primärleistungswandlers bzw. Konverters zu überwachen und ggfs. bei Detektion beispielsweise eines kritischen Betriebszustands (z. B. Über-/Unterspannung/-strom/-temperatur), selbständig oder durch die Steuereinheit veranlasst Gegenmaßnahmen zu ergreifen, d. h. die vorgenannte Steuerung auszuführen wie z. B. den Konverter temporär elektrisch wirksam vom Stromversorgungsanschluss zu trennen oder temporär eine Übertragungsleistung zu begrenzen und dergleichen, um u. a. unerwünschte Effekte bei kurzzeitigen Überspannungen zu verhindern. Der Hilfsschaltungsteil unterscheidet sich demnach von dem Konverter dadurch, dass er im Wesentlichen nicht an der eigentlichen Energieumsetzung beteiligt ist.

Zur Erfüllung seiner Aufgabe benötigt der Hilfsschaltungsteil selbst elektrische Energie. Dementsprechend weist der Hilfsschaltungsteil eine primärseitige Energieversorgung auf, die von der dem Konverter zugeführten primärseitigen Konverterspannung bereitgestellt ist. Eine typische Leistungsaufnahme des Hilfsschaltungsteils kann hierbei zum Beispiel etwa 1,5 mA bei 12 V betragen.

Der wenigstens eine Sekundärleistungswandler dient zur sekundärseitigen Bereitstellung einer Hilfsenergie und ist primärseitig am Stromversorgungsanschluss parallel zum Primärleistungswandler angeschlossen.

Die vom Sekundärleistungswandler bereitgestellte Hilfsenergie wird verwendet, die sekundärseitig angeordnete Steuereinheit mit elektrischer Energie zu versorgen. Zu diesem Zweck kann es vorgesehen sein, dass der Sekundärleistungswandler im Gegensatz zum Primärleistungswandler nur eine kleine maximale Leistung bereitstellt, z. B. 3 W, welche jedenfalls nicht ausreicht, um einen ordnungsgemäßen Betrieb des am Verbraucheranschluss angeschlossenen Verbrauchers aufrechtzuerhalten. Der Primärleistungswandler kann vorteilhaft hingegen so dimensioniert sein, dass über diesen der zum ordnungsgemäßen Betrieb des Verbrauchers erforderliche Leistungsbedarf, z. B. vorzugsweise wenigstens 100 W, 300 W oder wenigstens 500 W, abgedeckt werden kann.

Weiterhin ist die Steuereinheit über einen Informationspfad in informationsübertragender Weise mit dem Hilfsschaltungsteil elektrisch verbunden, um den Primärleistungswandler in Abhängigkeit von den übertragenen Informationen zu steuern, wobei die Steuerung direkt (z. B. über einen entsprechenden Steuerpfad/Steuerleitung) oder indirekt (z. B. über den Hilfsschaltungsteil) erfolgen kann.

Die Informationsübertragung kann beispielsweise die vom Hilfsschaltungsteil erfassten Betriebsparameter (z. B. Spannung, Strom, Temperatur usw.) umfassen. Die Informationsübertragung kann auch Steuerinformationen umfassen, die insbesondere von der Steuereinheit zum Hilfsschaltungsteil übertragen werden können, um die Steuerung des Primärleistungswandlers zu bewirken. Insofern kann die Informationsübertragung über den Informationspfad bidirektional zwischen dem Hilfsschaltungsteil und der Steuereinheit erfolgen, ohne jedoch zwingend auf eine bidirektionale Informationsübertragung über den Informationspfad beschränkt zu sein.

Gemäß der Erfindung ist die Steuereinheit eingerichtet, in einem Energieübertragungsmodus der Energieversorgungseinheit ein elektrisch wirksames Verbinden des Konverters mit dem Stromversorgungsanschluss zu bewirken sowie dem Hilfsschaltungsteil die primärseitige Energieversorgung bereitzustellen und in einem gegenüber dem Energieübertragungsmodus verbrauchsreduzierten Stand-by-Modus der Energieversorgungseinheit ein elektrisch wirksames Trennen des Konverters vom Stromversorgungsanschluss zu bewirken sowie die primärseitige Energieversorgung des Hilfsschaltungsteils zu unterbrechen.

Die erfindungsgemäße Energieversorgungseinheit schafft unter anderem mit der Trennung zwischen dem Primärleistungswandler zur Energieübertragung und dem Sekundärleistungswandler zur Hilfsstromversorgung der Steuereinheit in Kombination mit der steuerbaren Abschaltung des Hilfsschaltungsteils die Möglichkeit, die Leerlaufleistungsaufnahme des über die Energieversorgungseinheit am Stromnetz betriebenen Verbrauchers im Stand-by-Modus signifikant zu verringern. Damit können insbesondere gesetzliche Anforderungen, zum Beispiel der eingangs erwähnte Grenzwert von 500 mW maximaler Stand-by-Energieaufnahme, sicher erfüllt werden. Dennoch können über die Energieversorgungseinheit Verbraucher mit einer im Vergleich zu einem solchen Grenzwert hohen betrieblichen Leistungsaufnahme, zum Beispiel wenigstens 100 W, bevorzugt wenigstens 300 W und noch bevorzugter wenigstens 500 W, zuverlässig und sicher versorgt werden. Da der Primärleistungswandler neben seiner eigentlichen Leistungsübertragungsfunktion im Wesentlichen nicht speziell auch auf den verbrauchsarmen Stand-by-Modus ausgelegt sein muss, kann er eine geringere Anzahl Bauelemente aufweisen, was den Wirkungsgrad der Leistungswandlung erhöht und die Herstellungskosten reduziert.

Die Steuereinheit ist eingerichtet, im Stand-by-Modus das elektrisch wirksame Trennen des Konverters vom Stromversorgungsanschluss zu bewirken. Dies kann beispielsweise vermittels des Hilfsschaltungsteils erfolgen (indirekte Steuerung). Alternativ oder zusätzlich kann die Steuereinheit auch über einen separat vorgesehenen Steuerpfad direkt das Abschalten bzw. Trennen des Konverters bewirken (direkte Steuerung), z. B. durch Schalten (d. h. Öffnen/Schließen) eines entsprechend vorgesehenen Schaltmittels (z. B. Leistungshalbleiterschalter).

Alternativ oder zusätzlich kann der Hilfsschaltungsteil nach einer möglichen Ausgestaltung des Erfindungsgegenstands ausgebildet sein, den Konverter wahlweise vom Stromversorgungsanschluss elektrisch wirksam zu trennen. Dies kann zum Beispiel in Reaktion auf eine von der Steuereinheit über den Informationspfad übertragene Steuerinformation geschehen.

Das Trennen des Konverters kann temporär auch durch den Hilfsschaltungsteil selbst erfolgen, wenn dieser beispielsweise eine Überspannung am Stromversorgungsanschluss und/oder im Primärleistungswandler detektiert, um unverzüglich (d. h. in kürzester Zeit) auf derartige Überspannungsereignisse zu reagieren. Hierdurch lassen sich negative Effekte auf den Konverter vermeiden. Das temporäre Trennen des Konverters zum Beispiel bei Überspannungsereignissen kann auch durch die Steuereinheit veranlasst sein, indem sie eine Steuerinformation über den Informationspfad zum Hilfsschaltungsteil überträgt.

Zusätzlich oder alternativ kann der Hilfsschaltungsteil auch ausgebildet sein, den Konverter grundsätzlich auch automatisch bereits durch das vorbeschriebene Abschalten des Hilfsschaltungsteils im Stand-by-Modus elektrisch wirksam vom Stromversorgungsanschluss zu trennen, so dass auf den separaten Steuerpfad zwischen der Steuereinheit und dem Konverter ggfs. verzichtet werden kann.

Die Herstellungskosten der Energieversorgungseinheit sowie seine Leistungsaufnahme im Stand-by-Modus können weiter reduziert werden, indem der Sekundärleistungswandler ausgebildet ist, eine im Vergleich zum Primärleistungswandler geringere Leerlaufleistung aufzunehmen. Der Sekundärleistungswandler kann in technisch einfacher und kostengünstiger Weise auf eine wesentlich geringere Leerlaufleistung von bevorzugt höchstens 500 mW, noch bevorzugter höchstens 300 mW und am meisten bevorzugt höchstens 100 mW ausgelegt werden als der (bevorzugt leistungsstarke) Primärleistungswandler, dessen Begrenzung auf eine maximale Leistungsaufnahme im Leerlauf kleiner als bereits 10 W einen erheblichen konstruktiven Mehraufwand, eine Komplexitätserhöhung sowie deutliche Mehrkosten mit sich bringt.

Eine vorteilhafte Weiterbildung des Erfindungsgegenstands sieht vor, dass der Hilfsschaltungsteil ebenfalls eine sekundärseitige Energieversorgung aufweist, die von der Hilfsenergie des Sekundärleistungswandlers bereitgestellt ist. Auf diese Weise kann ein Teil des Hilfsschaltungsteils über die primärseitige Energieversorgung versorgt sein und ein anderer Teil des Hilfsschaltungsteils, insbesondere der Teil, der galvanisch mit dem Informationspfad verbunden ist, über die sekundärseitige Energieversorgung, die ebenfalls die mit dem Informationspfad verbundene Steuereinheit speist, versorgt sein. Hierdurch ist es möglich, eine galvanische Isolation zwischen der Steuereinheit und dem Primärleistungswandler vorzusehen und dennoch die informationsübertragende Verbindung zwischen der sekundärseitig angeordneten Steuereinheit und dem Hilfsschaltungsteil des Primärleistungswandlers bereitzustellen, indem der Hilfsschaltungsteil entsprechend getrennt aufgebaut ist.

Dementsprechend kann in einer weiteren vorteilhaften Ausgestaltung der Erfindung zwischen der Steuereinheit und dem Primärleistungswandler oder zwischen der Steuereinheit und der Netzeingangsseite des Primärleistungswandlers, d. h. dem Stromversorgungsanschluss, eine galvanische Trennung (Isolation) mittels einer entsprechenden Isolationsvorrichtung eingeführt sein. Die galvanische Trennung kann zum Beispiel mittels einer induktiven oder kapazitiven Kopplungseinrichtung oder mittels Optokoppler erfolgen, ohne jedoch zwingend hierauf beschränkt zu sein.

Gemäß einer vorteilhaften Weiterbildung des Erfindungsgegenstands erfolgt die primärseitige Energieversorgung des Hilfsschaltungsteils über eine Konstantstromquelle, in die ein steuerbares Schaltelement integriert ist. Das heißt, die Konstantstromquelle umfasst das Schaltelement als einen Bestandteil und ist nicht etwa der Konstantstromquelle nachgeschaltet, insbesondere nicht in Serie zu dieser geschaltet. Als Schaltelement ist hierbei ein Funktionselement zu verstehen, das im Wesentlichen lediglich in zwei vorbestimmten Schaltzuständen wirksam betrieben ist, nämlich in einem geöffneten, hochohmigen Schaltzustand (offen) und in einem geschlossenen, niederohmigen Schaltzustand (geschlossen). Das Schaltelement ist damit im Wesentlichen nicht an der Stromregelung (Regelung der Stromstärke) der Konstantstromquelle an sich beteiligt.

Wie bereits hierin erwähnt wurde, kann zwar die primärseitige Leistungsaufnahme des Hilfsschaltungsteils verhältnismäßig gering sein, zum Beispiel lediglich etwa 1,5 mA bei 12 V, jedoch stellt es grundsätzlich eine Herausforderung dar, die primärseitige Energieversorgung des Hilfsschaltungsteils über die primärseitige Konverterspannung zuverlässig und durch einen kostengünstigen Aufbau bereitzustellen. Zum Beispiel muss auch bei der kleinsten zulässigen Betriebs-/Netzspannung, z. B. 85 VAC, noch genug Energie für den Hilfsschaltungsteil bereitgestellt werden, um einen ordnungsgemäßen Betrieb des Primärleistungswandlers sicherstellen zu können. Wenn zudem eine Stromaufnahme der primärseitigen Energieversorgung im Wesentlichen linear von der Betriebs-/Netzspannung abhängt, ergibt kann sich näherungsweise ein quadratischer Zusammenhang zwischen Leistungsaufnahme und Betriebs-/Netzspannung ergeben, z. B. bei Vorhandensein eines wirksamen ohmschen Widerstands in der primärseitigen Energieversorgung. Beim Betrieb der Energieversorgungseinheit mit höheren Betriebsspannungen, z. B. 264 VAC, kann es dadurch erschwert bis unmöglich sein, die Anforderungen an die maximale Stand-by-Leistungsaufnahme einzuhalten.

In der vorliegenden Ausgestaltung wird mittels der Konstantstromquelle erreicht, dass der Zusammenhang zwischen der Leistungsaufnahme der primärseitigen Energieversorgung und der Betriebsspannung der Energieversorgungseinheit in erster Näherung linear ist. Dennoch können sich nur durch das Vorsehen der Konstantstromquelle immer noch Werte für die Leistungsaufnahme ergeben, die die restliche Auslegung der Energieversorgungseinheit verteuern. Zum Beispiel ergeben sich bei 1,5 mA und 230 VAC Betriebsspannung bereits 345 mW Leistungsaufnahme der primärseitigen Energieversorgung.

Die bei der vorliegenden Ausgestaltung bereitgestellte Kombination der Konstantstromquelle mit dem steuerbaren, integrierten Schaltelement bietet den wesentlichen Vorteil, die Leistungsaufnahme der primärseitigen Energieversorgung im Stand-by-Modus im Wesentlichen vollständig zu beseitigen, indem die primärseitige Energieversorgung vollständig unterbrochen, d. h. abgeschaltet wird.

In bevorzugter Ausführung kann das Schaltelement hierbei von der Steuereinheit gesteuert sein, da sie über das Hilfsschaltungsteil die erforderlichen Informationen über den augenblicklichen Betriebszustand (d. h. Energieübertragung oder Stand-by) des Primärleistungswandlers erhalten kann, wie hierin ausführlich beschrieben ist.

Eine noch weitere vorteilhafte Ausgestaltung der Erfindung sieht vor, dass das Schaltelement ein Optokoppler mit einer optisch auf einen Optokoppler-Transistor einwirkenden Optokoppler-LED ist. Hierdurch lässt sich zusätzlich in baulich einfacher, technisch eleganter und kostengünstiger Weise eine galvanische Trennung zwischen der primärseitigen Energieversorgung und einer das Schaltelement steuernden Einheit, die bevorzugt zum Beispiel die sekundärseitig angeordnete Steuereinheit sein kann, realisieren.

Es ist darauf hinzuweisen, dass die primärseitige Energieversorgung mit Konstantstromquelle und einem integrierten, steuerbaren Schaltelement, insbesondere einem galvanisch isoliert steuerbaren Schaltelement, wie zum Beispiel ein Optokoppler, grundsätzlich nicht zwingend auf eine Kombination mit der hierin offenbarten erfindungsgemäßen Energieversorgungseinheit beschränkt ist. Vielmehr kann eine solche Energieversorgung allgemein überall dort vorteilhaft eingesetzt werden, wo eine galvanische Trennung zwischen einer das Schaltelement steuernden Steuereinheit und einer die Energieversorgung bereitstellenden Versorgungsspannung (z. B. die primärseitige Konverterspannung) aufrechterhalten werden soll, wobei die Energieversorgung bei Nichtgebrauch (z. B. Stand-by) mittels des Schaltelements abgeschaltet werden kann und seine Leerlaufleistungsaufnahme im Wesentlichen auf null reduziert werden kann.

Dementsprechend soll vom Umfang der vorliegenden Beschreibung auch eine derartige galvanisch getrennt schaltbare Energieversorgung in Alleinstellung umfasst sein. Bezüglich der Begriffsdefinitionen, Merkmale sowie deren Wirkungen und Vorteile, die in technisch sinnvoller Weise ebenso der galvanisch getrennt schaltbaren Energieversorgung zugeschrieben werden können, kann vollumfänglich auf die Offenbarung sinngemäßer Definitionen, Merkmale, Wirkungen und Vorteile der erfindungsgemäßen Energieversorgungseinheit zurückgegriffen werden. Folglich kann die Offenbarung hierin bezüglich der erfindungsgemäßen Energieversorgungseinheit in sinngemäßer Weise ebenso zur Definition der galvanisch getrennt schaltbaren Energieversorgungseinheit herangezogen werden und umgekehrt. Eine explizite Wiederholung von Erläuterungen sinngemäß gleicher Merkmale, deren Wirkungen und Vorteile kann zugunsten einer kompakteren Beschreibung an dieser Stelle unterbleiben, ohne dass derartige Auslassungen als Einschränkung für die galvanisch getrennt schaltbare Energieversorgung in Alleinstellung auszulegen wären.

Eine weitere vorteilhafte Ausgestaltung des Erfindungsgegenstands sieht vor, dass die Konstantstromquelle einen Feldeffekttransistor, insbesondere Verarmungstyp-Metall-Oxid-Halbleiter-Feldeffekttransistor, und einen zu diesem in Serie geschalteten Widerstand aufweist. Über eine geeignete Dimensionierung des Widerstands kann in Kombination mit dem in Serie geschalteten Schaltelement, insbesondere bei Wahl eines Optokopplers als Schaltelement, das Regelverhalten der Konstantstromquelle optimal im Sinne einer ausreichend hohen und zuverlässigen primärseitigen Energieversorgung mit minimaler eigenen Leistungsaufnahme vorgegeben werden.

Weiterhin nach einer bevorzugten Ausgestaltung der Erfindung kann ein mit dem Stromversorgungsanschluss elektrisch verbundener Gleichrichter vorgesehen sein, der die primärseitige Konverterspannung bereitstellt. Der Gleichrichter kann zum Beispiel ein Dioden-Gleichrichter sein. Der Gleichrichter kann bevorzugt eine Komponente des Primärleistungswandlers sein, ohne jedoch zwingend hierauf beschränkt zu sein. Jedenfalls ist die primärseitige Energieversorgung im vorliegenden Fall aus der vom Gleichrichter bereitgestellten Konvertergleichspannung gespeist.

Entsprechend weiterer vorteilhafter Ausgestaltungen des Erfindungsgegenstands kann der Hilfsschaltungsteil ausgebildet sein, als Betriebsparameter die primärseitige Konverterspannung und/oder eine Spannung der primärseitigen Energieversorgung zu erfassen und/oder als Betriebsparameter einen Stromfluss zum Konverter und/oder zum Hilfsschaltungsteil zu erfassen.

Weiterhin bevorzugt kann der Primärleistungswandler eingerichtet und ausgebildet sein, am Verbraucheranschluss eine elektrische Leistung von wenigstens 100 W, bevorzugter wenigstens 300 W und noch bevorzugter wenigstens 500 W, bereitzustellen.

Gemäß einer noch weiteren vorteilhaften Ausgestaltung des Erfindungsgegenstands ist wenigstens ein mit dem Konverter elektrisch verbundener, wiederaufladbarer Energiespeicher, z. B. Batteriezelle wie Lithium-Ionen-Zelle, vorgesehen. Der Energiespeicher kann hierbei mit dem Verbraucheranschluss verbunden sein. Mit anderen Worten ist der Energiespeicher in diesem Fall vorteilhaft direkt in der Energieversorgungseinheit selbst integriert (verbaut). Zum Beispiel kann der wenigstens eine Energiespeicher in dem Konverter integriert sein. Der Konverter kann hierzu beispielsweise eine so genannte kaskadierte H-Brückenschaltung aufweisen, in welche der bzw. die Energiespeicher entsprechend integriert verbaut sind und vom Konverter für einen Ladevorgang mit der am Stromversorgungsanschluss zugeführten elektrischen Energie versorgt werden können.

Gemäß einem weiteren Aspekt der Erfindung weist ein Energieversorgungssystem, insbesondere ein mobiles oder tragbares Energieversorgungssystem, wenigstens einen wiederaufladbaren Energiespeicher (z. B. Batteriezelle wie Lithium-Ionen-Zelle) und eine Energieversorgungseinheit nach einer der hierin offenbarten Ausgestaltungen auf. Der Energiespeicher kann über die Energieversorgungseinheit mit elektrischer Energie aus einer an die Energieversorgungseinheit anschließbaren Energiequelle, z. B. Stromnetz, versorgt werden, um diesen zu laden.

Als mobiles, insbesondere aber tragbares Energieversorgungssystem ist ein System mit einem Gewicht und einer Größe zu verstehen, die für eine Person handhabbar sind. Das Gewicht des Energieversorgungssystems liegt dementsprechend bevorzugt unter 25 Kilogramm und die Größe ist so bemessen, dass das Energieversorgungssystem zum Beispiel als Rucksack getragen werden kann. Das Energieversorgungssystem ist jedoch nicht zwingend auf eine mobile bzw. tragbare Ausgestaltung beschränkt.

Gemäß einem noch weiteren Aspekt der Erfindung weist ein Verfahren zum Betrieb einer Energieversorgungseinheit, vorzugsweise nach einer der hierin offenbarten Ausgestaltungen, die Schritte auf:
- Bereitstellen eines Stromversorgungsanschlusses, mit dem eine elektrische Energiequelle, insbesondere Stromnetz, elektrisch verbunden wird,
- Bereitstellen eines Verbraucheranschlusses, mit dem ein aus der Energiequelle elektrisch zu versorgender Verbraucher elektrisch verbunden wird,
- Bereitstellen eines Primärleistungswandlers mit einem Konverter, mit dem die Energie vom Stromversorgungsanschluss zum Verbraucheranschluss gewandelt und übertragen wird, und mit einem Hilfsschaltungsteil, mit dem wenigstens ein Betriebsparameter des Primärleistungswandlers erfasst wird und/oder der Konverter gesteuert wird, wobei dem Hilfsschaltungsteil eine primärseitige Energieversorgung aus einer dem Konverter zugeführten primärseitigen Konverterspannung bereitgestellt wird,
- Bereitstellen wenigstens eines am Stromversorgungsanschluss parallel zum Primärleistungswandler angeschlossenen Sekundärleistungswandlers, mit dem sekundärseitig eine Hilfsenergie bereitgestellt wird,
- Bereitstellen einer Steuereinheit, die mit der vom Sekundärleistungswandler bereitgestellten Hilfsenergie elektrisch versorgt wird, wobei der Primärleistungswandler von der Steuereinheit in Abhängigkeit von Informationen, die zwischen der Steuereinheit und dem Hilfsschaltungsteil über einen Informationspfad übertragen werden, gesteuert wird,
wobei in einem Energieübertragungsmodus der Energieversorgungseinheit der Konverter mit dem Stromversorgungsanschluss elektrisch wirksam verbunden wird sowie dem Hilfsschaltungsteil die primärseitige Energieversorgung bereitgestellt wird und in einem gegenüber dem Energieübertragungsmodus verbrauchsreduzierten Stand-by-Modus der Energieversorgungseinheit der Konverter elektrisch wirksam vom Stromversorgungsanschluss getrennt wird sowie die primärseitige Energieversorgung des Hilfsschaltungsteils unterbrochen wird.

Es sei darauf hingewiesen, dass sowohl bezüglich verfahrensbezogener Begriffsdefinitionen, Wirkungen und Vorteile verfahrensgemäßer Merkmale sowie hinsichtlich des hierin ebenfalls offenbarten, erfindungsgemäßen Energieversorgungssystems vollumfänglich auf die Offenbarung sinngemäßer Definitionen, Merkmale, Wirkungen und Vorteile der erfindungsgemäßen Energieversorgungseinheit zurückgegriffen werden kann. Dementsprechend können Offenbarungen bezüglich der erfindungsgemäßen Energieversorgungseinheit in sinngemäßer Weise ebenso zur Definition des erfindungsgemäßen Verfahrens sowie des erfindungsgemäßen Energieversorgungssystems herangezogen werden und umgekehrt, sofern dies nicht ausdrücklich ausgeschlossen ist. Auf eine Wiederholung von Erläuterungen sinngemäß gleicher Merkmale, deren Wirkungen und Vorteile kann zugunsten einer kompakteren Beschreibung verzichtet werden, ohne dass derartige Auslassungen als Einschränkung auszulegen wären.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Blockschaltbild eines Ausführungsbeispiels einer Energieversorgungseinheit gemäß der Erfindung,
- Fig. 2: ein Schaltbild eines Ausführungsbeispiels einer primärseitigen Energieversorgung der Energieversorgungseinheit aus Fig. 1 und
- Fig. 3: ein Blockschaltbild eines Ausführungsbeispiels eines Energieversorgungssystems gemäß der Erfindung.

In den unterschiedlichen Figuren sind hinsichtlich ihrer Funktion gleichwertige Teile stets mit denselben Bezugszeichen versehen, so dass diese in der Regel auch nur einmal beschrieben werden.

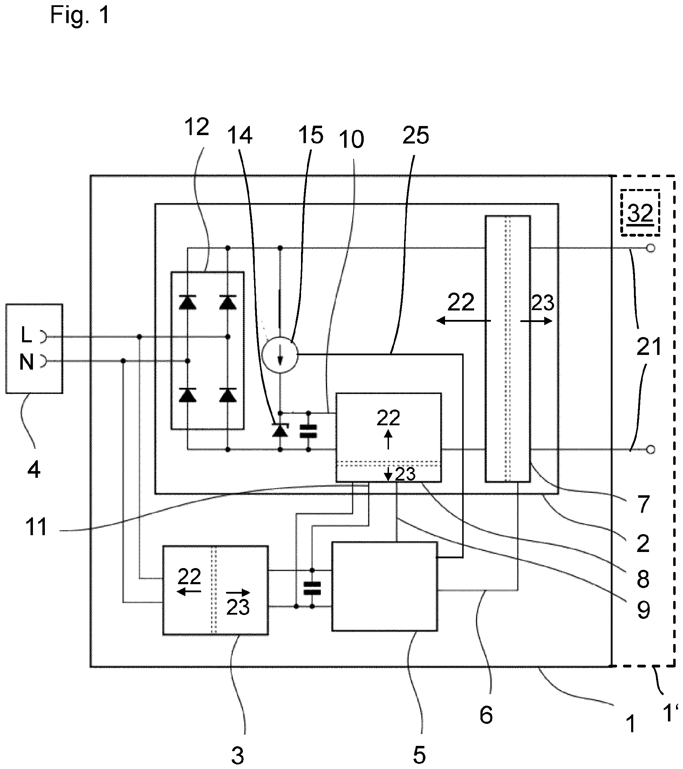

Fig. 1 stellt ein Blockschaltbild eines Ausführungsbeispiels einer Energieversorgungseinheit 1 gemäß der Erfindung zur Versorgung eines Verbrauchers (nicht dargestellt) mit elektrischer Energie aus einer Energiequelle, z. B. Stromnetz wie Niedervolt-Wechselspannungsnetz mit beispielsweise 230 VAC dar.

In Fig. 1 ist mit dem Bezugszeichen 22 jeweils eine Primärseite der dargestellten Funktionskomponenten und mit dem Bezugszeichen 23 jeweils eine Sekundärseite dieser Funktionskomponenten veranschaulicht.

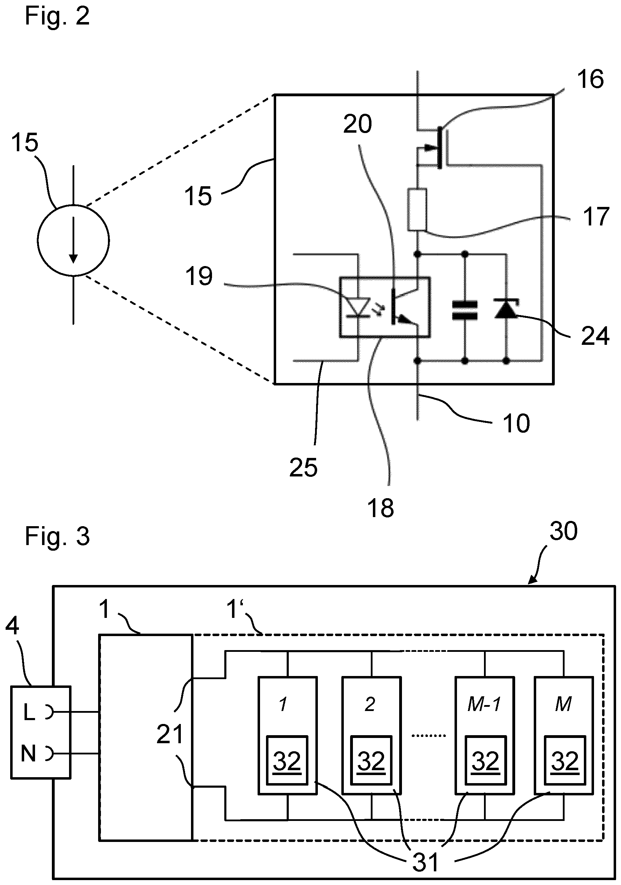

Fig. 1 ist zu entnehmen, dass die Energieversorgungseinheit 1 einen Stromversorgungsanschluss 4 zum elektrischen Verbinden der Energieversorgungseinheit 1 mit der Energiequelle aufweist. Weiter weist die beispielhafte Energieversorgungseinheit 1 einen Verbraucheranschluss 21 zum elektrischen Verbinden des zu versorgenden Verbrauchers (z. B. Verbraucher 32 in Fig. 3) auf sowie einen Primärleistungswandler 2, der wiederum einen Konverter 7 zur Wandlung und Übertragung der Energie vom Stromversorgungsanschluss 4 zum Verbraucheranschluss 21 aufweist und einen Hilfsschaltungsteil 8 zum Erfassen wenigstens eines Betriebsparameters des Primärleistungswandlers 2 und/oder zum Steuern des Konverters 7 aufweist. Der Hilfsschaltungsteil 8 weist eine primärseitige Energieversorgung 10, die in Fig. 1 symbolisch an einem primärseitigen Energieversorgungsanschluss des Hilfsschaltungsteils 8 veranschaulicht ist, auf, die von einer dem Konverter 7 zugeführten primärseitigen Konverterspannung bereitgestellt ist.

Im dargestellten beispielhaften Fall der Fig. 1 ist, jedoch ohne zwingende Beschränkung hierauf, die primärseitige Konverterspannung eine von einem Dioden-Gleichrichter 12 bereitgestellte Gleichspannung, die der Gleichrichter 12 aus der am Stromversorgungsanschluss anliegenden Netzspannung erzeugt, die zum Beispiel eine über einen Phasenleiter L und einen Neutralleiter N bereitgestellte Wechselspannung (z. B. 230 VAC) sein kann.

Vorliegend befindet sich die primärseitige Energieversorgung 10 auf der Gleichspannungsseite des Gleichrichters 12.

Fig. 1 ist weiter zu entnehmen, dass die dem Hilfsschaltungsteil 8 zugeführte, aus der primärseitigen Energieversorgung bezogene Versorgungsspannung mittels einer herkömmlichen Z-Diode 14 an die jeweiligen Versorgungsanschlüsse des Hilfsschaltungsteils 8 angelegt ist.

Weiterhin weist die Energieversorgungseinheit 1 in Fig. 1 wenigstens einen am Stromversorgungsanschluss 4 parallel zum Primärleistungswandler 2 angeschlossenen Sekundärleistungswandler 3 zur Bereitstellung einer Hilfsenergie auf der Sekundärseite 23 auf. Diese Hilfsenergie wird genutzt, um eine ebenfalls auf der Sekundärseite 23 des Sekundärleistungswandlers 3 angeordnete Steuereinheit 5 elektrisch zu versorgen. Die Steuereinheit 5 ist über einen Informationspfad 9 (z. B. Signalleitung(en), Datenbus etc.) in informationsübertragender Weise mit dem Hilfsschaltungsteil 8 elektrisch verbunden. Hierdurch kann sie den Primärleistungswandler 2 in Abhängigkeit von den auf dem Informationspfad 9 übertragenen Informationen steuern. Die Steuerung kann hierbei direkt (z. B. über eine entsprechende Steuerleitung wie beispielsweise einen Steuerpfad 6) oder indirekt (z. B. über den Hilfsschaltungsteil 8) erfolgen.

Die Steuereinheit 5 des in Fig. 1 gezeigten Energieversorgungssystems 1 ist nun eingerichtet, in einem Energieübertragungsmodus der Energieversorgungseinheit 1 ein elektrisch wirksames Verbinden des Konverters 7 mit dem Stromversorgungsanschluss 4 zu bewirken und in einem gegenüber dem Energieübertragungsmodus verbrauchsreduzierten Stand-by-Modus der Energieversorgungseinheit 1 die primärseitige Energieversorgung 10 des Hilfsschaltungsteils 8 zu unterbrechen, insbesondere im Wesentlichen stromlos zu schalten, so dass eine Leistungsaufnahme der primärseitigen Energieversorgung 10 in diesem Fall im Wesentlichen auf null reduziert wird. Die Steuerung der primärseitigen Energieversorgung 10 kann die Steuereinheit 5 beispielsweise über einen Steuerpfad 25 bewirken.

Es ist zu verstehen, dass die Steuereinheit 5 vorteilhaft ebenfalls eingerichtet sein kann, in dem Stand-by-Modus ein elektrisch wirksames Trennen des Konverters 7 vom Stromversorgungsanschluss 4 zu bewirken, um die Leerlaufleistungsaufnahme am Stromversorgungsanschluss 4 weiterhin deutlich zu senken. Die Steuereinheit 5 kann hierzu einen beispielhaft in Fig. 1 gezeigten separaten Steuerpfad 6 (z. B. Steuerleitung) nutzen, der bevorzugt direkt mit dem Konverter 7 verbunden ist. Die Steuereinheit 5 kann den Konverter 7 jedoch auch vermittels des Hilfsschaltungsteils 8, das heißt ohne separaten Steuerpfad 6, steuern, d. h. vom Stromversorgungsanschluss 4 elektrisch wirksam trennen, wie bereits im allgemeinen Teil dieser Beschreibung ausführlich dargelegt wurde. Dort sind auch weitere Möglichkeiten der Steuerung bzw. Trennung des Konverters 7 beschrieben. Zum Beispiel kann der Hilfsschaltungsteil 8 ausgebildet sein, den Konverter 7 wahlweise vom Stromversorgungsanschluss 4 elektrisch wirksam zu trennen.

Der Sekundärleistungswandler 3 ist vorliegend ausgebildet, eine im Vergleich zum Primärleistungswandler 2 deutlich geringere Leerlaufleistung aufzunehmen, z. B. maximal etwa 500 mW oder vorzugsweise noch weniger, z. B. weniger als etwa 100 mW. Die Erfindung ist nicht zwingend auf diese spezifischen Werte beschränkt, auch wenn diese als besonders bevorzugte Ausführungsformen angesehen werden.

Der Primärleistungswandler 2 ist hingegen eingerichtet, am Verbraucheranschluss 21 eine elektrische Leistung von wenigstens 100 W, bevorzugt wenigstens 300 W und noch bevorzugter wenigstens 500 W bereitzustellen. Wiederum ist die Erfindung nicht zwingend auf diese spezifischen Werte beschränkt, auch wenn diese als besonders bevorzugte Ausführungsformen angesehen werden.

Der Hilfsschaltungsteil 8 kann bei der dargestellten Energieversorgungseinheit 1 ausgebildet sein, als Betriebsparameter die primärseitige Konverterspannung (d. h. auf der DC-Seite des Gleichrichters 12) und/oder eine Spannung der primärseitigen Energieversorgung 10 zu erfassen und/oder als Betriebsparameter einen Stromfluss zum Konverter 7 und/oder zum Hilfsschaltungsteil 8 zu erfassen.

Des Weiteren ist Fig. 1 zu entnehmen, dass der Hilfsschaltungsteil 8 neben seiner primärseitigen Energieversorgung 10 auch eine sekundärseitige Energieversorgung 11 aufweist, die von der Hilfsenergie des Sekundärleistungswandlers 3 bereitgestellt ist. Dies bietet u. a. den Vorteil, dass zwischen der Steuereinheit 5 und dem Primärleistungswandler 2, zumindest aber zur Netzeingangsseite (d. h. zum Stromversorgungsanschluss 4) des Primärleistungswandlers 2, eine zuverlässige galvanische Trennung (Isolation) eingeführt werden kann (in Fig. 1 nicht explizit dargestellt). Die galvanische Trennung kann über eine geeignete Isolationsvorrichtung erfolgen, z. B. Optokoppler, induktive Kopplungseinrichtung und dergleichen.

In Fig. 1 ist weiterhin dargestellt, dass die primärseitige Energieversorgung 10 eine des Hilfsschaltungsteils 8 über eine Konstantstromquelle 15 erfolgt, in die ein steuerbares Schaltelement 18 (Fig. 2) integriert ist. Das Schaltelement 18 kann bevorzugt von der Steuereinheit 5 gesteuert sein.

Fig. 2 stellt ein Schaltbild eines Ausführungsbeispiels der primärseitigen Energieversorgung 10 der Energieversorgungseinheit 1 aus Fig. 1 dar. Die Konstantstromquelle 15 weist im Wesentlichen einen Feldeffekttransistor 16 auf, der vorliegend als Verarmungstyp-Metall-Oxid-Halbleiter-Feldeffekttransistor ausgebildet ist, ohne jedoch zwingend hierauf beschränkt zu sein. Weiterhin weist die Konstantstromquelle 15 einen zum Feldeffekttransistor 16 in Serie geschalteten Widerstand 17 auf.

Deutlich ist Fig. 2 zu entnehmen, dass das Schaltelement 18 integrierter Bestandteil der Konstantstromquelle 15 selbst ist und nicht etwa der Konstantstromquelle 15 nachgeschaltet bzw. in Serie zu dieser geschaltet ist. Das heißt, die Konstantstromquelle 15 umfasst das Schaltelement 18 als einen wesentlichen Bestandteil. Deutlich ist dies u. a. an dem Gate-Anschluss des Feldeffekttransistors 16 zu erkennen, der sich ausgehend von dem FET 16 über den Widerstand 17 und das Schaltelement 18 erstreckt und elektrisch am (in Fig. 2 unteren) Ausgang der Energieversorgung 10 angeschlossen ist.

Das Schaltelement 18 wird im Wesentlichen lediglich in zwei vorbestimmten Schaltzuständen wirksam betrieben, d. h. in einem geöffneten, hochohmigen Schaltzustand (offen) und in einem geschlossenen, niederohmigen Schaltzustand (geschlossen). Das Schaltelement 18 ist jedenfalls im Wesentlichen nicht an der Stromregelung (Regelung der Stromstärke) der Konstantstromquelle 15 an sich beteiligt.

Wie Fig. 2 zu entnehmen ist, ist das Schaltelement 18 vorliegend ein an sich herkömmlicher Optokoppler, das heißt mit einer optisch auf einen Optokoppler-Transistor 20 einwirkenden Optokoppler-LED 19. Damit stellt Fig. 2 einen beispielhaften Aufbau einer galvanisch getrennt steuerbaren Energieversorgung, vorliegend die primärseitige Energieversorgung 10 des Hilfsschaltungsteils 8, dar.

Parallel zum Schalelement 18 ist bei dem in Fig. 2 dargestellten Ausführungsbeispiel ebenfalls eine Z-Diode 24 geschaltet.

Bei geeigneter Dimensionierung des Stroms in der Optokoppler-LED 19 fallen über der Kollektor-Emitter-Strecke des Optokoppler-Transistors 20 im eingeschalteten Zustand zum Beispiel ca. 150 mV ab. Dieser Wert ist klein im Vergleich zur über dem Widerstand 17 abfallenden Spannung, die zum Beispiel etwa 1 V bis etwa 2,5 V - je nach Typ des verwendeten Feldeffekttransistors 16 - beträgt und zugleich im Wesentlichen unabhängig vom fließenden Strom ist. Daher stellt sich bei angesteuertem Optokoppler 18 das an sich herkömmlich bekannte Stromregelverhalten einer Konstantstromquelle ein. Wird die LED 19 des Optokopplers 18 hingegen nicht angesteuert, so ist die Kollektor-Emitter-Strecke des Optokoppler-Transistors 20 nicht leitend und es kann eine Spannung im Bereich zwischen etwa 1 bis 5 V, insbesondere etwa 2 bis 5 V, über dieser Stecke abfallen, welche dazu führt, dass der Feldeffekttransistor 16 komplett sperrt und die Konstantstromquelle 15 faktisch abgeschaltet ist.

Die zum Optokoppler 18 parallel geschaltete Z-Diode 24 ist vorteilhaft in der Lage, beispielsweise im Fall eines Fehlers, zum Beispiel kein oder zu geringer Widerstandswert des Widerstands 17, die Spannung über dem Optokoppler (und folglich auch die Gate-Source-Spannung des Feldeffekttransistors) zu begrenzen.

Fig. 3 stellt ein Blockschaltbild eines Ausführungsbeispiels eines Energieversorgungssystems 30 gemäß der Erfindung dar. Es ist zu erkennen, dass das beispielhafte Energieversorgungssystem 30 wenigstens einen wiederaufladbaren Energiespeicher 32 und eine Energieversorgungseinheit 1 nach einer der hierin offenbarten Ausgestaltungen aufweist.

Das in Fig. 3 dargestellte Energieversorgungssystem 30 weist zum Beispiel eine Anzahl M Batteriemodule 31 auf, die wiederum jeweils wenigstens einen Energiespeicher 32 aufweisen, der aus einer oder mehreren Batteriezellen, wie z. B. Lithium-Ionen-Zellen, gebildet sein kann.

Um die Energiespeicher 32 aufzuladen, können diese über die Energieversorgungseinheit 1 mit elektrischer Energie aus einer an die Energieversorgungseinheit 1 anschließbaren Energiequelle, zum Beispiel Stromnetz, versorgt werden. Hierzu wird die Energiequelle elektrisch mit dem Stromversorgungsanschluss 4 der Energieversorgungseinheit 1 verbunden.

Es ist zu verstehen, dass die Batteriemodule 31 und die Energieversorgungseinheit 1 integral miteinander elektrisch verbunden sein können. Das heißt, der Verbraucheranschluss 21 muss nicht als betrieblich lösbarer Steckanschluss ausgeführt sein, wie beispielsweise der Stromversorgungsanschluss 4.

Es ist auch denkbar, den Verbraucheranschluss 21 nicht explizit aus der Energieversorgungseinheit 1 herauszuführen, wie in Fig. 3 durch die gestrichelt markierte Erweiterung der Energieversorgungseinheit 1' angedeutet sein soll. In einer solchen Ausgestaltung können die Batteriezellen 32 bzw. Batteriemodule 31 in der Energieversorgungseinheit 1' oder im Konverter 7 der Energieversorgungseinheit 1' integriert sein. Hierzu kann der Konverter 7 beispielsweise eine so genannte kaskadierte H-Brückenschaltung aufweisen, in die Batteriezellen 32 integriert verbaut und von dem Konverter bzw. der H-Brückenschaltung gespeist sein können (d. h. für einen Ladevorgang).

Fig. 1 stellt die erweiterte Energieversorgungseinheit 1 ' schematisch ebenfalls unabhängig von dem in Fig. 3 gezeigten Energieversorgungssystem 30 dar, wobei die Anordnung des Energiespeichers 32 in Fig. 1 lediglich symbolisch zu verstehen ist. Vielmehr kann der Energiespeicher 32, wie vorstehend bereits erwähnt, in der Energieversorgungseinheit 1' mit dem internen Verbraucheranschluss 21 verbunden sein. Zum Beispiel kann der wenigstens eine Energiespeicher 32 in dem Konverter 7 integriert sein. Der Konverter 7 kann beispielsweise eine so genannte kaskadierte H-Brückenschaltung aufweisen (nicht dargestellt), in welche der bzw. die Energiespeicher 32 entsprechend integriert verbaut sein können und vom Konverter 7 für einen Ladevorgang mit der am Stromversorgungsanschluss 4 zugeführten elektrischen Energie versorgt werden können.

Nach dem Aufladen der Energiespeicher 32 kann das Energieversorgungssystem 30 in Fig. 3 insbesondere dazu dienen, einen ebenfalls am Stromversorgungsanschluss 4 anschließbaren elektrischen Verbraucher (nicht dargestellt) mit Energie aus den Batteriemodulen 31 bzw. Energiespeichern 32 betrieblich zu versorgen. Das Energieversorgungssystem 30 besonders bevorzugt als mobiles oder tragbares Versorgungssystem ausgebildet sein, ohne jedoch zwingend hierauf beschränkt zu sein. Das Energieversorgungssystem 30 kann ebenso ein stationäres Versorgungssystem sein.

Besonders bevorzugt kann die vom Energieversorgungssystem 30 mittels der Batteriemodule 31 bereitgestellte Energie-/Stromversorgung derart bemessen sein, damit leistungsfähige Arbeitsmaschinen, das heißt mit einer elektrischen Aufnahmeleistung von beispielsweise über 1 kW, wie z. B. Diamantbohrgerät, Hochdruckreinigern oder Industriestaubsaugern, zu betreiben.

Die hierin offenbarte erfindungsgemäße Energieversorgungseinheit sowie das offenbarte erfindungsgemäße Verfahren zum Betrieb einer Energieversorgungseinheit sind nicht auf die hierin jeweils beschriebenen Ausführungsformen beschränkt, sondern umfassen auch gleich wirkende weitere Ausführungsformen, die sich aus technisch sinnvollen weiteren Kombinationen der hierin beschriebenen Merkmale der Energieversorgungseinheit sowie des Verfahrens ergeben. Insbesondere sind die vorstehend in der allgemeinen Beschreibung und der Figurenbeschreibung genannten und/oder in den Figuren allein gezeigten Merkmale und Merkmalskombinationen nicht nur in den jeweils hierin explizit angegebenen Kombinationen, sondern auch in anderen Kombinationen oder in Alleinstellung verwendbar.

### Bezugszeichenliste

- 1: Energieversorgungseinheit
- 2: Primärleistungswandler
- 3: Sekundärleistungswandler
- 4: Stromversorgungsanschluss
- 5: Steuereinheit
- 6: Steuerpfad
- 7: Schaltungsteil, Konverter
- 8: Hilfsschaltungsteil
- 9: Informationspfad
- 10: Primärseitige Energieversorgung
- 11: Sekundärseitige Energieversorgung
- 12: Gleichrichter
- 14: Z-Diode
- 15: Konstantstromquelle
- 16: Feldeffekttransistor (FET)
- 17: Widerstand
- 18: Optokoppler
- 19: Optokoppler-LED
- 20: Optokoppler-Transistor
- 21: Verbraucheranschluss
- 22: Primärseite
- 23: Sekundärseite
- 24: Z-Diode
- 25: Steuerpfad
- 30: Energieversorgungssystem
- 31: Batteriemodul
- 32: Energiespeicher, Batteriezelle
- L: Phasenanschluss
- N: Neutralleiteranschluss
- M: Anzahl Batteriemodule

## Patentansprüche

1. Energieversorgungseinheit (1) zur Versorgung eines Verbrauchers (32) mit elektrischer Energie aus einer Energiequelle, insbesondere Stromnetz, aufweisend
- einen Stromversorgungsanschluss (4) zum elektrischen Verbinden der Energiequelle,
- einen Verbraucheranschluss (21) zum elektrischen Verbinden des zu versorgenden Verbrauchers (32),
- einen Primärleistungswandler (2), der einen Konverter (7) zur Wandlung und Übertragung der Energie vom Stromversorgungsanschluss (4) zum Verbraucheranschluss (21) aufweist und einen Hilfsschaltungsteil (8) zum Erfassen wenigstens eines Betriebsparameters des Primärleistungswandlers (2) und/oder zum Steuern des Konverters (7) aufweist, wobei der Hilfsschaltungsteil (8) eine primärseitige Energieversorgung (10) aufweist, die von einer dem Konverter (7) zugeführten primärseitigen Konverterspannung bereitgestellt ist,
- wenigstens einen am Stromversorgungsanschluss (4) parallel zum Primärleistungswandler (2) angeschlossenen Sekundärleistungswandler (3) zur sekundärseitigen Bereitstellung einer Hilfsenergie, und
- eine mit der vom Sekundärleistungswandler (3) bereitgestellten Hilfsenergie elektrisch versorgte Steuereinheit (5), die über einen Informationspfad (9) in informationsübertragender Weise mit dem Hilfsschaltungsteil (8) elektrisch verbunden ist, um den Primärleistungswandler (2) in Abhängigkeit von den übertragenen Informationen zu steuern,
wobei die Steuereinheit (5) eingerichtet ist, in einem Energieübertragungsmodus der Energieversorgungseinheit (1) ein elektrisch wirksames Verbinden des Konverters (7) mit dem Stromversorgungsanschluss (4) zu bewirken sowie dem Hilfsschaltungsteil (8) die primärseitige Energieversorgung (10) bereitzustellen und in einem gegenüber dem Energieübertragungsmodus verbrauchsreduzierten Stand-by-Modus der Energieversorgungseinheit (1) ein elektrisch wirksames Trennen des Konverters (7) vom Stromversorgungsanschluss (4) zu bewirken sowie die primärseitige Energieversorgung (10) des Hilfsschaltungsteils (8) zu unterbrechen.

2. Energieversorgungseinheit gemäß einem der vorhergehenden Ansprüche, **dadurch gekennzeichnet, dass**
der Sekundärleistungswandler (3) ausgebildet ist, eine im Vergleich zum Primärleistungswandler (2) geringere Leerlaufleistung aufzunehmen.

3. Energieversorgungseinheit gemäß einem der vorhergehenden Ansprüche, **dadurch gekennzeichnet, dass**
der Hilfsschaltungsteil (8) ausgebildet ist, den Konverter (7) wahlweise vom Stromversorgungsanschluss (4) elektrisch wirksam zu trennen.

4. Energieversorgungseinheit gemäß einem der vorhergehenden Ansprüche, **dadurch gekennzeichnet, dass**
der Hilfsschaltungsteil (8) eine sekundärseitige Energieversorgung (11) aufweist, die von der Hilfsenergie des Sekundärleistungswandlers (3) bereitgestellt ist.

5. Energieversorgungseinheit gemäß einem der vorhergehenden Ansprüche, **dadurch gekennzeichnet, dass**
die primärseitige Energieversorgung (10) des Hilfsschaltungsteils (8) über eine Konstantstromquelle (15) erfolgt, in die ein steuerbares Schaltelement (18) integriert ist.

6. Energieversorgungseinheit gemäß dem vorhergehenden Anspruch,
**dadurch gekennzeichnet, dass**
das Schaltelement (18) ein Optokoppler mit einer optisch auf einen Optokoppler-Transistor (20) einwirkenden Optokoppler-LED (19) ist, wobei das Schaltelement (18) vorzugsweise von der Steuereinheit (5) gesteuert ist.

7. Energieversorgungseinheit gemäß Anspruch 5 oder 6,
**dadurch gekennzeichnet, dass**
die Konstantstromquelle (15) einen Feldeffekttransistor (16), insbesondere Verarmungstyp-Metall-Oxid-Halbleiter-Feldeffekttransistor, und einen zu diesem in Serie geschalteten Widerstand (17) aufweist.

8. Energieversorgungseinheit gemäß einem der vorhergehenden Ansprüche, **dadurch gekennzeichnet, dass**
ein mit dem Stromversorgungsanschluss (4) elektrisch verbundener Gleichrichter (12) vorgesehen ist, der die primärseitige Konverterspannung bereitgestellt.

9. Energieversorgungseinheit gemäß einem der vorhergehenden Ansprüche,
**dadurch gekennzeichnet, dass**
die Steuereinheit (5) von dem Primärleistungswandler (2) oder von dem Stromversorgungsanschluss (4) über eine entsprechende Isolationsvorrichtung galvanisch getrennt ist.

10. Energieversorgungseinheit gemäß einem der vorhergehenden Ansprüche,
**dadurch gekennzeichnet, dass**
der Hilfsschaltungsteil (8) ausgebildet ist, als Betriebsparameter die primärseitige Konverterspannung und/oder eine Spannung der primärseitigen Energieversorgung (10) zu erfassen und/oder als Betriebsparameter einen Stromfluss zum Konverter (7) und/oder zum Hilfsschaltungsteil (8) zu erfassen.

11. Energieversorgungseinheit gemäß einem der vorhergehenden Ansprüche,
**dadurch gekennzeichnet, dass**
der Sekundärleistungswandler (3) eine maximale Leerlaufleistung von höchstens 500 mW, bevorzugt höchstens 300 mW und noch bevorzugter höchstens 100 mW, aufnimmt.

12. Energieversorgungseinheit gemäß einem der vorhergehenden Ansprüche,
**dadurch gekennzeichnet, dass**
der Primärleistungswandler (2) eingerichtet ist, am Verbraucheranschluss (21) eine elektrische Leistung von wenigstens 100 W, bevorzugter wenigstens 300 W und noch bevorzugter wenigstens 500 W, bereitzustellen.

13. Energieversorgungseinheit gemäß einem der vorhergehenden Ansprüche,
**gekennzeichnet durch**
wenigstens einen mit dem Konverter (2) elektrisch verbundenen, wiederaufladbaren Energiespeicher (32).

14. Energieversorgungssystem (30), insbesondere mobiles oder tragbares Energieversorgungssystem, aufweisend wenigstens einen wiederaufladbaren Energiespeicher (32) und eine Energieversorgungseinheit (1) nach einem der vorhergehenden Ansprüche, wobei der Energiespeicher (32) über die Energieversorgungseinheit (1) mit elektrischer Energie aus einer an die Energieversorgungseinheit (1) anschließbaren Energiequelle, insbesondere Stromnetz, versorgt werden kann, um diesen zu laden.

15. Verfahren zum Betrieb einer Energieversorgungseinheit (1), vorzugsweise nach einem der Ansprüche 1 bis 13, aufweisend die Schritte:
- Bereitstellen eines Stromversorgungsanschlusses (4), mit dem eine elektrische Energiequelle, insbesondere Stromnetz, elektrisch verbunden wird,
- Bereitstellen eines Verbraucheranschlusses (21), mit dem ein aus der Energiequelle elektrisch zu versorgender Verbraucher (32) elektrisch verbunden wird,
- Bereitstellen eines Primärleistungswandlers (2) mit einem Konverter (7), mit dem die Energie vom Stromversorgungsanschluss (4) zum Verbraucheranschluss (21) gewandelt und übertragen wird, und mit einem Hilfsschaltungsteil (8), mit dem wenigstens ein Betriebsparameter des Primärleistungswandlers (2) erfasst wird und/oder der Konverter (7) gesteuert wird, wobei dem Hilfsschaltungsteil (8) eine primärseitige Energieversorgung (10) aus einer dem Konverter (7) zugeführten primärseitigen Konverterspannung bereitgestellt wird,
- Bereitstellen wenigstens eines am Stromversorgungsanschluss (4) parallel zum Primärleistungswandler (2) angeschlossenen Sekundärleistungswandlers (3), mit dem sekundärseitig eine Hilfsenergie bereitgestellt wird,
- Bereitstellen einer Steuereinheit (5), die mit der vom Sekundärleistungswandler (3) bereitgestellten Hilfsenergie elektrisch versorgt wird, wobei der Primärleistungswandler (2) von der Steuereinheit (5) in Abhängigkeit von Informationen, die zwischen der Steuereinheit (5) und dem Hilfsschaltungsteil (8) über einen Informationspfad (9) übertragen werden, gesteuert wird,
wobei in einem Energieübertragungsmodus der Energieversorgungseinheit (1) der Konverter (7) mit dem Stromversorgungsanschluss (4) elektrisch wirksam verbunden wird sowie dem Hilfsschaltungsteil (8) die primärseitige Energieversorgung (10) bereitgestellt wird und in einem gegenüber dem Energieübertragungsmodus verbrauchsreduzierten Stand-by-Modus der Energieversorgungseinheit (1) der Konverter (7) elektrisch wirksam vom Stromversorgungsanschluss (4) getrennt wird sowie die primärseitige Energieversorgung (10) des Hilfsschaltungsteils (8) unterbrochen wird.

## Claims

1. An energy supply unit (1) for supplying a load (32) with electrical energy from an energy source, particularly an electrical grid, comprising
- a power supply connector (4) for electrically connecting the energy source,
- a load connector (21) for electrically connecting the load (32) to be supplied,
- a primary power converter (2) comprising a converter (7) for converting and transmitting the energy from the power supply connector (4) to the load connector (21) and an auxiliary circuit part (8) for detecting at least one operating parameter of the primary power converter (2) and/or for controlling the converter (7), wherein the auxiliary circuit part (8) has a primary-side energy supply (10) which is provided by a primary-side converter voltage that is supplied to the converter (7),
- at least one secondary power converter (3), connected to the power supply connector (4) in parallel to the primary power converter (2), for providing auxiliary energy on the secondary-side, and
- a control unit (5), which is electrically supplied with the auxiliary energy provided by the secondary power converter (3) and which is electrically connected via an information path (9) to the auxiliary circuit part (8) in an information-transmitting manner, in order to control the primary power converter (2) depending on the transmitted information,
wherein the control unit (5) is configured, in an energy transmission mode of the energy supply unit (1), to cause an electrically effective connection of the converter (7) to the power supply connector (4) and also to provide the primary-side energy supply (10) to the auxiliary circuit part (8) and, in a standby mode of the energy supply unit (1), having reduced-consumption compared to the energy transmission mode, to cause an electrically effective disconnection of the converter (7) from the power supply connector (4) and also to interrupt the primary-side energy supply (10) of the auxiliary circuit part (8).

2. The energy supply unit according to any of the preceding claims,
**characterized in that**
the secondary power converter (3) is configured to accommodate a lower idle power compared to the primary power converter (2).

3. The energy supply unit according to any of the preceding claims,
**characterized in that**
the auxiliary circuit part (8) is configured to selectively disconnect the converter (7) from the power supply connector (4) in an electrically effective manner.

4. The energy supply unit according to any of the preceding claims,
**characterized in that**
the auxiliary circuit part (8) comprises a secondary-side energy supply (11) provided by the auxiliary energy of the secondary power converter (3).

5. The energy supply unit according to any of the preceding claims,
**characterized in that**
the primary-side energy supply (10) of the auxiliary circuit part (8) is realized via a constant-current source (15), into which a controllable switching element (18) is integrated.

6. The energy supply unit according to the preceding claim, **characterized in that**
the switching element (18) is an optocoupler with an optocoupler LED (19), acting optically on an optocoupler transistor (20), wherein the switching element (18) is preferably controlled by the control unit (5).

7. The energy supply unit according to Claim 5 or 6, **characterized in that**
the constant-current source (15) comprises a field effect transistor (16), particularly a depletion mode metal-oxide-semiconductor field effect transistor and a resistor (17), connected in series therewith.

8. The energy supply unit according to any of the preceding claims,
**characterized in that**
a rectifier (12) is provided, electrically connected to the power supply connector (4),which provides the primary-side converter voltage.

9. The energy supply unit according to any of the preceding claims,
**characterized in that**
the control unit (5) is galvanically isolated from the primary power converter (2) or from the power supply connector (4) by means of a corresponding isolation device.

10. The energy supply unit according to any of the preceding claims,
**characterized in that**
the auxiliary circuit part (8) is configured to detect as operating parameters the primary-side converter voltage and/or a voltage of the primary-side energy supply (10) and/or to detect as operating parameters a current flow to the converter (7) and/or to the auxiliary circuit part (8).

11. The energy supply unit according to any of the preceding claims,
**characterized in that**
the secondary power converter (3) accommodates a maximum idle power of at most 500 mW, preferably at most 300 mW and even more preferably at most 100 mW.

12. The energy supply unit according to any of the preceding claims,
**characterized in that**
the primary power converter (2) is configured to provide an electric power of at least 100 W, preferably at least 300 W and even more preferably at least 500 W at the load connector (21).

13. The energy supply unit according to any of the preceding claims,
**characterized by**
at least one rechargeable energy storage unit (32) which is electrically connected to the converter (2).

14. An energy supply system (30), particularly a mobile or portable energy supply system, comprising at least one rechargeable energy storage unit (32) and one energy supply unit (1) according to any of the preceding claims, wherein the energy storage unit (32) can be supplied via the energy supply unit (1) with electrical energy from an energy source, particularly an electrical grid, which can be connected to the energy supply unit (1), in order to charge it.

15. A method for operating an energy supply unit (1), preferably according to one of Claims 1 to 13, comprising the steps:
- providing a power supply connector (4), to which an electrical energy source, particularly an electrical grid, is electrically connected,
- providing a load connector (21), to which a load (32), which is to be supplied electrically from the energy source, is electrically connected,
- providing a primary power converter (2) with a converter (7), with which the energy from the power supply connector (4) to the load connector (21) is converted and transmitted, and with an auxiliary circuit part (8), with which at least one operating parameter of the primary power converter (2) is detected and/or the converter (7) is controlled, wherein a primary-side energy supply (10) from a primary-side converter voltage, which is supplied to the converter (7), is provided to the auxiliary circuit part (8),
- providing at least one secondary power converter (3), which is connected to the power supply connector (4) in parallel to the primary power converter (2) with which an auxiliary energy is provided on the secondary side,
- providing a control unit (5) which is electrically supplied with the auxiliary energy provided by the secondary power converter (3), wherein the primary power converter (2) is controlled by the control unit (5) depending on information which is transmitted between the control unit (5) and the auxiliary circuit part (8) via an information path (9),
wherein, in an energy transmission mode of the energy supply unit (1), the converter (7) is electrically effectively connected to the power supply connector (4) and also the primary-side energy supply (10) is provided to the auxiliary circuit part (8) and, in a standby mode of the energy supply unit (1), which has reduced-consumption compared to the energy transmission mode, the converter (7) is electrically effectively disconnected from the power supply connector (4) and also the primary-side energy supply (10) of the auxiliary circuit part (8) is interrupted.

## Revendications

1. Unité d'alimentation en énergie (1) destinée à alimenter un consommateur (32) en énergie électrique à partir d'une source d'énergie, en particulier d'un réseau électrique, comprenant
- un raccord d'alimentation électrique (4) pour connecter électriquement la source d'énergie,
- un raccord de consommateur (21) pour connecter électriquement le consommateur (32) à alimenter,
- un convertisseur de puissance primaire (2) qui comprend un convertisseur (7) pour convertir et transmettre l'énergie du raccord d'alimentation électrique (4) au raccord de consommateur (21) et présente une partie de circuit auxiliaire (8) pour détecter au moins un paramètre de fonctionnement du convertisseur de puissance primaire (2) et/ou pour commander le convertisseur (7), dans laquelle la partie de circuit auxiliaire (8) comprend une alimentation en énergie côté primaire (10) qui est fournie par une tension de convertisseur côté primaire amenée au convertisseur (7),
- au moins un convertisseur de puissance secondaire (3) qui est raccordé sur le raccord d'alimentation électrique (4) en parallèle au convertisseur de puissance primaire (2) pour fournir côté secondaire une énergie auxiliaire, et
- une unité de commande (5) qui est alimentée électriquement en énergie auxiliaire fournie par le convertisseur de puissance secondaire (3) et qui est connectée électriquement à la partie de circuit auxiliaire (8) via un chemin d'informations (9) de manière à transmettre des informations afin de commander le convertisseur de puissance primaire (2) en fonction des informations transmises,
dans laquelle l'unité de commande (5) est configurée pour, dans un mode de transmission d'énergie de l'unité d'alimentation en énergie (1), provoquer une connexion électriquement efficace du convertisseur (7) au raccord d'alimentation électrique (4) ainsi que pour fournir alimentation en énergie (10) côté primaire à la partie de circuit auxiliaire (8), et pour, dans un mode veille de l'unité d'alimentation en énergie (1) qui est réduit en consommation par rapport au mode de transmission d'énergie, provoquer que le convertisseur (7) est isolé de manière électriquement efficace du raccord d'alimentation électrique (4) ainsi que pour interrompre l'alimentation en énergie côté primaire (10) de la partie de circuit auxiliaire (8).

2. Unité d'alimentation en énergie selon l'une quelconque des revendications précédentes,
**caractérisée par le fait que**
le convertisseur de puissance secondaire (3) est conçu pour absorber une puissance à vide inférieure par rapport au convertisseur de puissance primaire (2).

3. Unité d'alimentation en énergie selon l'une quelconque des revendications précédentes,
**caractérisée par le fait que**
la partie de circuit auxiliaire (8) est conçue pour isoler de manière électriquement efficace le convertisseur (7) du raccord d'alimentation électrique (4), de manière sélective.

4. Unité d'alimentation en énergie selon l'une quelconque des revendications précédentes,
**caractérisée par le fait que**
la partie de circuit auxiliaire (8) présente une alimentation en énergie côté secondaire (11) qui est fournie par l'énergie auxiliaire du convertisseur de puissance secondaire (3).

5. Unité d'alimentation en énergie selon l'une quelconque des revendications précédentes,
**caractérisée par le fait que**
l'alimentation en énergie côté primaire (10) de la partie de circuit auxiliaire (8) s'effectue par l'intermédiaire d'une source de courant constant (15), dans laquelle est intégré un élément de commutation (18) commandable.

6. Unité d'alimentation en énergie selon la revendication précédente,
**caractérisée par le fait que**
l'élément de commutation (18) est un optocoupleur ayant une DEL d'optocoupleur (19) qui agit optiquement sur un transistor d'optocoupleur (20), dans laquelle ledit élément de commutation (18) est commandé de préférence par l'unité de commande (5).

7. Unité d'alimentation en énergie selon la revendication 5 ou 6,
**caractérisée par le fait que**
la source de courant constant (15) présente un transistor à effet de champ (16), en particulier un transistor à effet de champ à structure métal-oxyde-semiconducteur à déplétion, et une résistance (17) connectée en série avec celui-ci.

8. Unité d'alimentation en énergie selon l'une quelconque des revendications précédentes,
**caractérisée par le fait qu'**
il est prévu un redresseur (12) qui est connecté électriquement au raccord d'alimentation électrique (4) et qui fournit la tension de convertisseur côté primaire.

9. Unité d'alimentation en énergie selon l'une quelconque des revendications précédentes,
**caractérisée par le fait que**
l'unité de commande (5) est isolée galvaniquement du convertisseur de puissance primaire (2) ou du raccord d'alimentation électrique (4) par l'intermédiaire d'un dispositif d'isolation correspondant.

10. Unité d'alimentation en énergie selon l'une quelconque des revendications précédentes,
**caractérisée par le fait que**
la partie de circuit auxiliaire (8) est conçue pour détecter la tension de convertisseur côté primaire et/ou une tension de l'alimentation en énergie côté primaire (10) en tant que paramètre de fonctionnement et/ou pour détecter un flux de courant vers le convertisseur (7) et/ou la partie de circuit auxiliaire (8) en tant que paramètre de fonctionnement.

11. Unité d'alimentation en énergie selon l'une quelconque des revendications précédentes,
**caractérisée par le fait que**
le convertisseur de puissance secondaire (3) absorbe une puissance maximale à vide de 500 mW tout au plus, de préférence de 300 mW tout au plus et de manière encore plus préférée de 100 mW tout au plus.

12. Unité d'alimentation en énergie selon l'une quelconque des revendications précédentes,
**caractérisée par le fait que**
le convertisseur de puissance primaire (2) est configuré pour fournir une puissance électrique d'au moins 100 W, de manière plus préférée d'au moins 300 W et de manière encore plus préférée d'au moins 500 W, au niveau du raccord de consommateur (21).

13. Unité d'alimentation en énergie selon l'une quelconque des revendications précédentes,
**caractérisée par**
au moins un dispositif de stockage d'énergie (32) rechargeable qui est connecté électriquement au convertisseur (2).

14. Système d'alimentation en énergie (30), en particulier système d'alimentation en énergie mobile ou portable, comprenant au moins un dispositif de stockage d'énergie (32) rechargeable et une unité d'alimentation en énergie (1) selon l'une quelconque des revendications précédentes, dans lequel ledit dispositif de stockage d'énergie (32) peut être alimenté, via l'unité d'alimentation en énergie (1), en énergie électrique provenant d'une source d'énergie, en particulier d'un réseau électrique, qui peut être connectée à l'unité d'alimentation en énergie (1).

15. Procédé destiné à faire fonctionner une unité d'alimentation en énergie (1), de préférence selon l'une quelconque des revendications 1 à 13, comprenant les étapes consistant à:
- fournir un raccord d'alimentation électrique (4) auquel est connectée électriquement une source d'énergie électrique, en particulier un réseau électrique,
- fournir un raccord de consommateur (21) auquel est connecté électriquement un consommateur (32) à alimenter électriquement à partir de la source d'énergie,
- fournir un convertisseur de puissance primaire (2) avec un convertisseur (7) au moyen duquel l'énergie est convertie et transmise du raccord d'alimentation électrique (4) au raccord de consommateur (21), et avec une partie de circuit auxiliaire (8) au moyen de laquelle au moins un paramètre de fonctionnement du convertisseur de puissance primaire (2) est détecté et/ou le convertisseur (7) est commandé, dans lequel à la partie de circuit auxiliaire (8) est fournie une alimentation en énergie côté primaire (10) d'une tension de convertisseur côté primaire qui est amenée au convertisseur (7),
- fournir au moins un convertisseur de puissance secondaire (3) qui est connecté sur le raccord d'alimentation électrique (4) en parallèle au convertisseur de puissance primaire (2) et au moyen duquel une énergie auxiliaire est fournie du côté secondaire,
- fournir une unité de commande (5) qui est alimentée électriquement en énergie auxiliaire fournie par le convertisseur de puissance secondaire (3), dans lequel le convertisseur de puissance primaire (2) est commandé par l'unité de commande (5) en fonction d'informations qui sont transmises entre l'unité de commande (5) et la partie de circuit auxiliaire (8) via un chemin d'informations (9),
dans lequel, dans un mode de transmission d'énergie de l'unité d'alimentation en énergie (1), le convertisseur (7) est connecté de manière électriquement efficace au raccord d'alimentation électrique (4) et l'alimentation en énergie côté primaire (10) est fournie à la partie de circuit auxiliaire (8), et, dans un mode veille de l'unité d'alimentation en énergie (1) qui est réduit en consommation par rapport au mode de transmission d'énergie, le convertisseur (7) est isolé de manière électriquement efficace du raccord d'alimentation électrique (4) et l'alimentation en énergie côté primaire (10) de la partie de circuit auxiliaire (8) est interrompue.
